# FASCICULE DE BREVET EUROPEEN

(11) **EP 1 680 796 B1**
(45) Date de publication et mention de la délivrance du brevet: **23.06.2010**
(21) Numéro de dépôt: 04805295.5
(22) Date de dépôt: 25.10.2004
(51) Int. Cl.: H01H 35/14, G01P 15/18, H01H 1/00, G01P 15/00, G01P 15/08

(54) **DETECTEUR DE MOUVEMENT A SIX DEGRES DE LIBERTE AVEC TROIS CAPTEURS DE POSITION ET PROCEDE DE FABRICATION D'UN CAPTEUR**
BEWEGUNGSDETEKTOR MIT SECHS FREIHEITSGRADEN MIT DREI POSITIONSSENSOREN UND VERFAHREN ZUR HERSTELLUNG EINES SENSORS
MOVEMENT DETECTOR HAVING SIX DEGREES OF FREEDOM WITH THREE POSITION SENSORS AND METHOD FOR THE PRODUCTION OF A SENSOR

(30) Priorité: 28.10.2003 FR 0312618
(43) Date de publication de la demande: 19.07.2006
(73) Titulaire: Commissariat à l'Énergie Atomique et aux Énergies Alternatives, 75015 Paris (FR)
(72) Inventeur: JOUANET, Laurent, F-38880 Autrans (FR); REY, Patrice, F-38430 Saint-Jean-de-Moirans (FR)
(74) Mandataire: Hecké, Gérard
(86) Numéro de dépôt international: PCT/FR2004/002736
(87) Numéro de publication internationale: WO 2005/045868

(56) Documents cités:
- EP-A- 0 997 737
- WO-A-95/27217
- WO-A-96/06328
- FR-A- 2 733 321
- US-A- 4 543 457
- US-A- 4 601 206
- US-A- 4 787 051
- US-A- 5 128 671
- US-A- 5 610 337

## Description

### Domaine technique de l'invention

L'invention concerne un détecteur de mouvement à six degrés de liberté comportant un support sur lequel sont disposés trois capteurs de position, disposés suivant trois axes, chaque capteur comportant un corps rigide, des zones conductrices disposées sur le corps rigide et un élément déformable, électriquement conducteur, présentant une position de repos, dans laquelle il est isolé des zones conductrices, et passant de la position de repos à une position active en réponse à un déplacement rapide de sens et de direction prédéterminés.

L'invention concerne également un procédé de fabrication d'un capteur.

### État de la technique

Dans le domaine des détecteurs de mouvement à six degrés de liberté, les détecteurs sont équipés de capteurs de position transmettant des mesures en continu pour obtenir des valeurs de positionnement précises. Les détecteurs connus répondent à une sollicitation mécanique, par exemple, à une action sur une manette, pour obtenir une indication de mouvement.

Ainsi le document US 5 854 622 décrit un appareil de mesure, comportant une manette sur laquelle agit un utilisateur et détectant des mouvements à six degrés de liberté, dans lequel les capteurs utilisés sont des résistances ou des capacités variables montées sur des axes mécaniques.

Le document US 5 128 671 décrit un détecteur de mouvement à plusieurs degrés de liberté comportant six accéléromètres intégrés dans un solide du type joystick. Deux accéléromètre sont disposés sur chaque axe de référence du détecteur et sont sensibles à un seul mouvement correspondant à cet axe particulier. Les accéléromètres sont constitués, par exemple, par des cantilevers flexibles.

Les appareils décrits ci-dessus permettent de détecter des variations continues et nécessitent une action sur un axe mécanique. Ils sont complètement inadaptés à la détection de petits mouvements impulsionnels, de faible amplitude, subis par un solide et provoqués, par exemple, par des chocs ou des déplacements rapides.

Par ailleurs, le document US 5 610 337 décrit un accéléromètre comportant un élément sensible constitué par une poutre basculante en équilibre sur sa partie centrale. Ce type d'accéléromètre permet de détecter une rotation ou une translation par rapport à un seul axe.

### Objet de l'invention

L'invention a pour but un détecteur ne présentant pas ces inconvénients et, en particulier, un détecteur de mouvement à six degrés de liberté permettant la détection de mouvements impulsionnels.

Selon l'invention, ce but est atteint par un détecteur selon les revendications annexées et, plus particulièrement, par le fait que l'élément déformable est en équilibre autour de sa partie centrale et comporte une pluralité de positions actives, chaque position active correspondant à deux degrés de liberté, l'élément déformable étant temporairement en contact avec deux des zones conductrices dans chaque position active.

Selon un mode de réalisation préférentiel, le corps rigide d'un capteur comporte deux substrats disposés face à face, connectés par des billes constituant une interconnexion électrique entre les zones conductrices de l'un des substrats et des zones de contact électrique de sortie formés sur l'autre substrat.

L'invention a également pour but un procédé de fabrication d'un capteur, dans lequel la fabrication du capteur comporte :
- la formation sur chacun des substrats de zones conductrices, de zones de contact d'alimentation et, sur l'un des substrats, de zones de contact électrique de sortie,
- la formation sur chacun des substrats d'un pilier central, en contact avec la zone de contact d'alimentation et supportant une couche conductrice destinée à constituer un demi-élément déformable,
- l'installation de billes sur les zones de contact électrique de sortie,
- l'hybridation des deux substrats disposés face à face.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 est une vue schématique, en perspective, d'un mode particulier de réalisation d'un détecteur de mouvement à trois capteurs de position selon l'invention.
Les figures 2 et 3 sont des vues, en coupe, d'un mode particulier de réalisation d'un capteur, selon la figure 1, respectivement, en position de repos horizontale et en position de repos verticale.
Les figures 4 et 5 représentent des vues, en coupe, du capteur selon la figure 2, en réponse à une translation, respectivement vers le bas et vers le haut.
Les figures 6 et 7 représentent des vues, en coupe, du capteur selon la figure 2 en réponse à une rotation, respectivement vers la gauche et vers la droite.
Les figures 8 et 9 représentent des vues, en perspective, d'un élément déformable, respectivement en forme de disque et en forme de poutre, d'un capteur selon la figure 2.
La figure 10 illustre schématiquement les connexions électriques des capteurs à un circuit de traitement d'un détecteur selon l'invention.
Les figures 11 à 15 représentent, en coupe, cinq étapes successives de la fabrication d'un capteur selon la figure 2.

### Description de modes particuliers de réalisation.

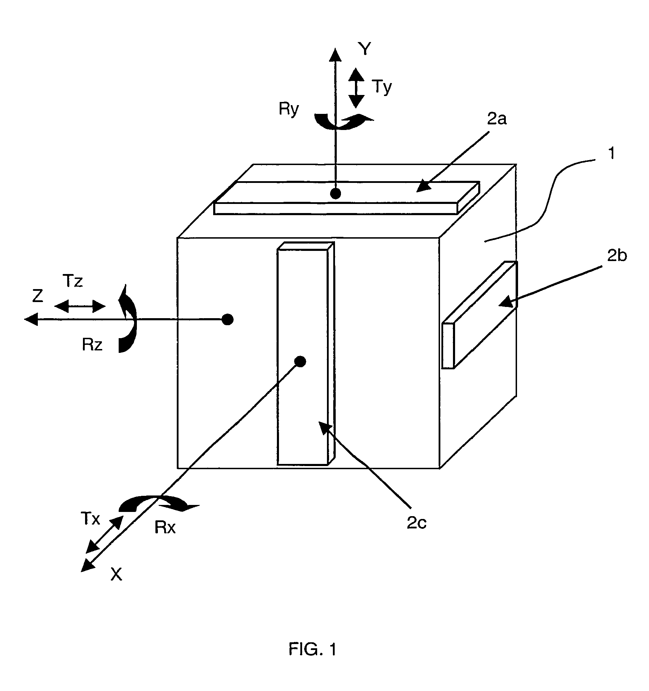

Selon la figure 1, le détecteur de mouvement à six degrés de liberté comporte un support 1, sur lequel sont montés trois capteurs de position 2a, 2b et 2c, suivant trois axes orthogonaux X, Y et Z. Chaque capteur est sensible, à partir d'un certain seuil, à des impulsions perçues suivant deux degrés de liberté particuliers, c'est-à-dire à une translation et à une rotation. Le capteur 2a, ou capteur « RxTy », est sensible à une rotation sur l'axe X et une translation sur l'axe Y. Le capteur 2b, ou capteur « RyTz », est sensible à une rotation sur l'axe Y et une translation sur l'axe Z. Et le capteur 2c, ou capteur « RzTx », est sensible à une rotation sur l'axe Z et une translation sur l'axe X.

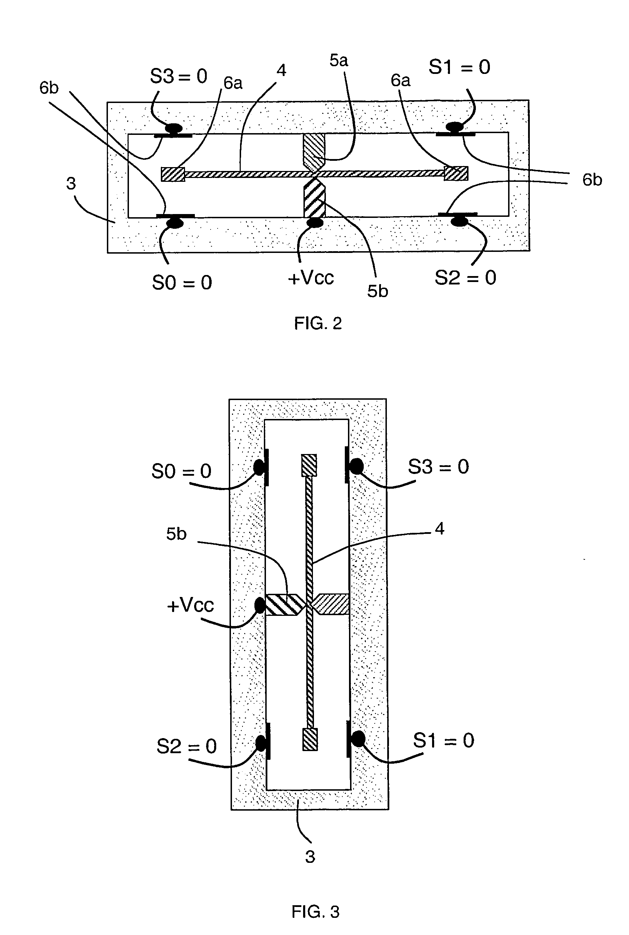

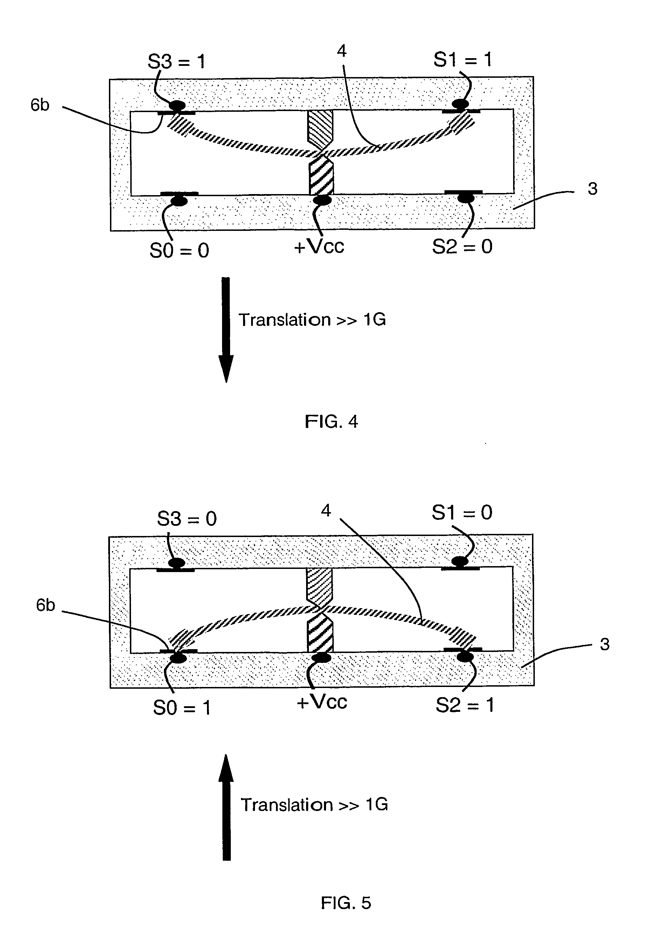

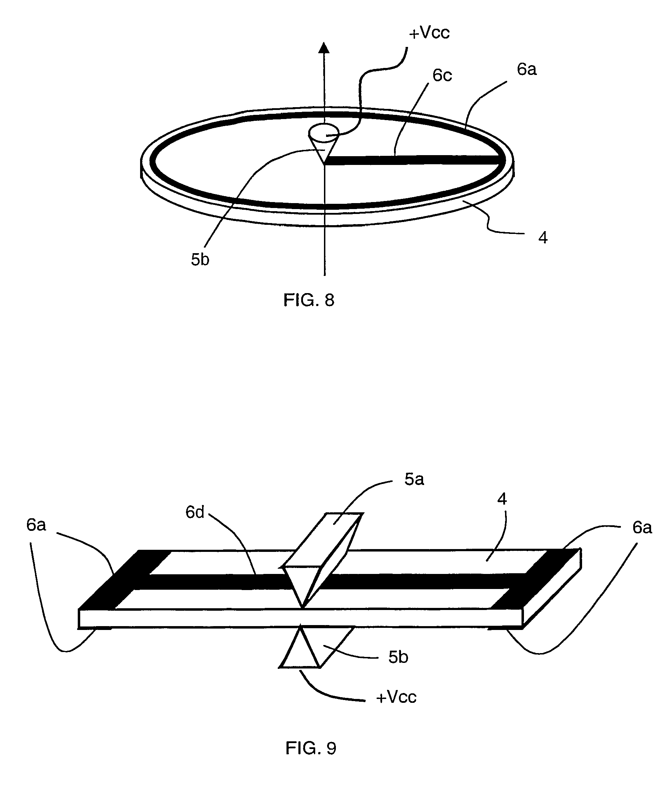

Pour détecter ces impulsions, chaque capteur de position 2 utilise le principe de la balance, représenté sur les figures 2 à 7. Chaque capteur 2 est constitué d'un corps rigide 3, à l'intérieur duquel un élément déformable 4 est normalement maintenu en équilibre (figures 2 et 3) autour d'un point central, par l'intermédiaire d'un organe d'appui 5 composé de deux parties 5a et 5b, symétriques par rapport à l'élément déformable 4 et solidaires du corps rigide 3. Une des parties, 5b, de l'organe d'appui est reliée électriquement à un circuit d'alimentation électrique délivrant une tension continue +Vcc. Des zones conductrices 6, sont aménagées respectivement sur le corps rigide 3 (zones 6b) et sur l'élément déformable 4 (zones 6a). Par élément déformable, on entend tout corps élastique de faible épaisseur pouvant osciller autour de sa position de repos, représentée aux figures 2 et 3, et reprenant sa position d'origine sans avoir subi de déformation irréversible. L'élément déformable 4 peut notamment avoir la forme d'un disque, comme le montre la figure 8, ou la forme d'une poutre, comme représenté sur la figure 9. Les zones conductrices 6a de l'élément déformable 4 sont reliées électriquement à la partie 5b et peuvent être situées, par exemple, sur le pourtour et aux extrémités de l'élément déformable 4 comme le montrent les figures 8 et 9. En position de repos de l'élément déformable 4, les zones conductrices 6a de l'élément déformable 4 sont isolées des zones conductrices 6b du corps rigide 3. Celles-ci sont placées à l'intérieur du corps rigide 3 et à des emplacements prédéterminés de manière à venir sélectivement en contact avec les zones conductrices 6a de l'élément déformable 4 en position d'activation du capteur, comme le montrent les figures 4 à 7.

Dans le mode particulier de réalisation représenté sur les figures 4 à 7, le corps rigide 3 est sensiblement rectangulaire et creux, avec deux parois internes sensiblement parallèles à l'élément déformable 4 en position de repos. Au moins deux zones conductrices 6b sont réalisées sur chacune de ces parois, respectivement supérieure et inférieure.

Pour ne pas être perturbé par la force de gravité G en position de repos, l'élément déformable 4 d'un capteur 2 doit être suffisamment rigide pour ne pas fléchir sous l'effet de son propre poids et ne pas venir en contact avec le corps rigide 3 en position de repos. Son maintien en équilibre, en position de repos, est également assuré pour tout déplacement dont l'accélération reste au plus égale à la force de gravité G.

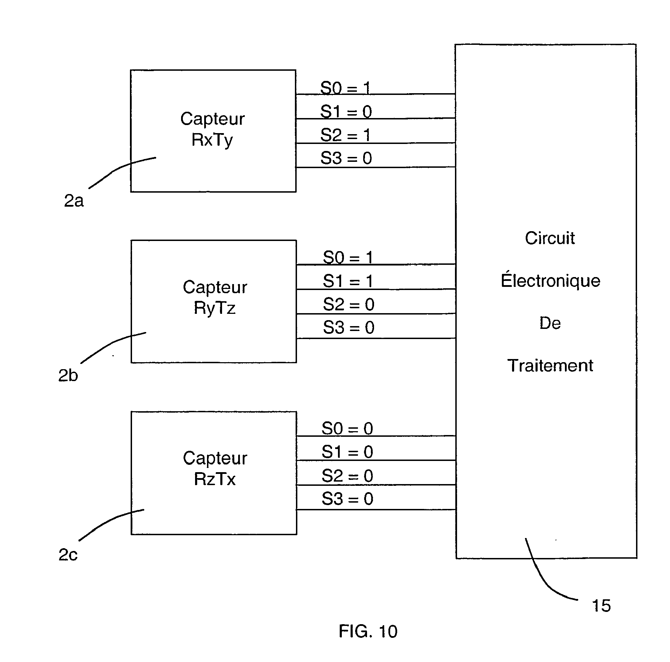

Selon le mode particulier de réalisation représenté aux figures 2 à 10, lorsqu'un mouvement de rotation ou de translation dépasse un certain seuil, les zones conductrices 6a de l'élément déformable 4 rentrent en contact un bref instant avec certaines zones conductrices 6b du corps rigide 3, par déséquilibre ou déformation. Les zones conductrices 6a, aménagées sur l'élément déformable 4, viennent ainsi brièvement en contact avec certaines zones conductrices 6b du corps rigide 3. Ce bref contact est détectable par un circuit électronique de traitement 15 connecté à toutes les zones conductrices 6b des capteurs 2 (figure 10). Chaque capteur renvoie quatre signaux S0, S1, S2 et S3 correspondant chacun à une zone conductrice 6b. En position de repos de l'élément déformable 4 d'un capteur 2, toutes les zones conductrices 6b sont isolées des zones conductrices 6a et fournissent au circuit électronique de traitement 15 des signaux binaires S0 à S3 qui prennent une première valeur, par exemple 0. Lorsqu'une zone conductrice 6b vient en contact avec une zone conductrice 6a de l'élément déformable 4, elle est alors connectée à la tension d'alimentation +Vcc et fournit un signal correspondant ayant une seconde valeur binaire (1 dans l'exemple considéré). Le circuit électronique de traitement 15 analyse en permanence les signaux S0 à S3 fournis par les différentes zones conductrices 6b des capteurs 2 et en déduit le type et le sens du déplacement. La correspondance entre les mouvements possibles d'un capteur 2 et les signaux S0 à S3 associés est représentée sur le tableau suivant :

| | **S0** | **S1** | **S2** | **S3** |
|---|---|---|---|---|
| **Position de repos** **(****figures 2 et 3****)** | 0 | 0 | 0 | 0 |
| **Translation vers le bas** **(****figure 4****)** | 0 | 1 | 0 | 1 |
| **Translation vers le haut** **(****figure 5****)** | 1 | 0 | 1 | 0 |
| **Rotation vers la gauche** **(****figure 6****)** | 0 | 0 | 1 | 1 |
| **Rotation vers la droite** **(****figure 7****)** | 1 | 1 | 0 | 0 |

Ainsi, en position de repos (figures 2 et 3), aucun contact n'est établi entre les zones conductrices 6a de l'élément déformable 4 et les zones conductrices 6b du corps rigide 3, et les quatre signaux S0, S1, S2 et S3 sont à 0. On obtient ainsi la combinaison binaire 0000.

Sur les figures 4 et 5, l'élément déformable 4 fléchit, respectivement vers le haut et vers le bas, de manière à ce que ses extrémités 6a viennent simultanément en contact avec deux zones conductrices 6b, disposées d'un même côté du corps rigide 3, respectivement au-dessus de l'élément déformable 4 et au-dessous de l'élément déformable 4.

Pour une translation vers le bas (figure 4) d'un capteur selon la figure 2, l'élément déformable 4 entre en contact avec le corps rigide 3 au niveau des zones conductrices 6b opposées au sens de déplacement. Les signaux S1 et S3 sont à 1, et les signaux S0 et S2 à 0. On obtient ainsi la combinaison binaire 0101.

Pour une translation vers le haut (figure 5) d'un capteur selon la figure 2, l'élément déformable 4 entre également en contact avec le corps rigide 3 au niveau des zones conductrices 6b opposées au sens de déplacement. Les signaux S1 et S3 sont à 0, et les signaux S0 et S2 à 1. On obtient ainsi la combinaison binaire 1010.

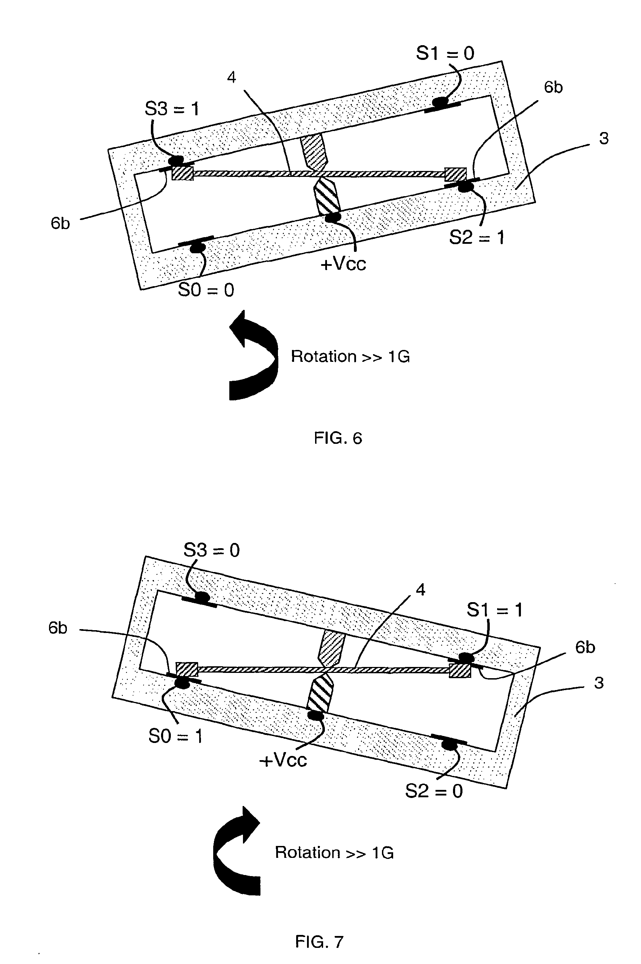

Sur les figures 6 et 7, l'élément déformable 4 pivote, de manière à ce que ses extrémités 6a viennent simultanément en contact avec une zone conductrice 6b de la paroi supérieure du corps rigide 3 et avec une zone conductrice 6b de la paroi inférieure du corps rigide 3.

Pour une rotation vers la gauche (figure 6) d'un capteur selon la figure 2, l'élément déformable 4 entre en contact avec le corps rigide 3 au niveau de deux zones conductrices 6b situées sur des faces opposées. Les signaux S2 et S3 sont à 1, et les signaux S0 et S1 à 0. On obtient ainsi la combinaison binaire 0011.

Pour une rotation vers la droite (figure 7) d'un capteur selon la figure 2, l'élément déformable 4 entre en contact avec le corps rigide 3 au niveau de deux autres zones conductrices 6b situées sur des faces opposées. Les signaux S2 et S3 sont alors à 0, et les signaux S0 et S1 à 1. On obtient ainsi la combinaison binaire 1100.

Ainsi, selon la figure 10, si, par exemple, le capteur 2a (capteur « RxTy ») fournit la combinaison 1010, le capteur 2b (capteur « RyTz ») la combinaison 1100 et le capteur 2c (capteur « RzTx ») la combinaison 0000, alors le circuit électronique de traitement 15 en déduit que le capteur 2a a subi une translation vers le haut, c'est-à-dire une translation dans le sens positif selon Y, que le capteur 2b a subi une rotation vers la droite, c'est-à-dire une rotation dans le sens positif selon Y et, que le capteur 2c est en position de repos. Cela est alors interprété comme un mouvement du support 1 en translation selon +Y avec une rotation selon +Y.

Dans un autre exemple non représenté, si le capteur 2a (capteur « RxTy ») fournit la combinaison 0011, le capteur 2b (capteur « RyTz ») la combinaison 0101 et le capteur 2c (capteur « RzTx ») la combinaison 0101, alors le circuit électronique de traitement 15 en déduit que le capteur 2a a subi une rotation vers la gauche, c'est-à-dire une rotation dans le sens négatif selon X, que le capteur 2b a subi une translation vers le bas, c'est-à-dire une translation dans le sens négatif selon Z et, que le capteur 2c a subi une translation vers le bas, c'est-à-dire une translation dans le sens négatif selon X. Cela est alors interprété comme un mouvement du support 1 en translation et en rotation selon
- X, couplées à une translation selon -Z.

Dans le mode particulier de réalisation représenté à la figure 8, l'élément déformable 4 est un disque de faible épaisseur en équilibre autour de son axe central. Les zones conductrices 6a sont aménagées sur le pourtour, ou périphérie, des deux faces du disque, et sont reliées à la partie 5b de l'organe d'appui 5 par des zones conductrices radiales 6c pour être alimentées électriquement. Dans la variante de réalisation illustrée à la figure 9, l'élément déformable 4 est une poutre de faible épaisseur, en équilibre autour de son axe médian transversal. Les zones conductrices 6a sont alors disposées aux deux extrémités de la poutre, à la fois sur la face supérieure et sur la face inférieure, et sont reliées par des zones conductrices médianes longitudinales 6d, à la partie 5b de l'organe d'appui pour être alimentées électriquement.

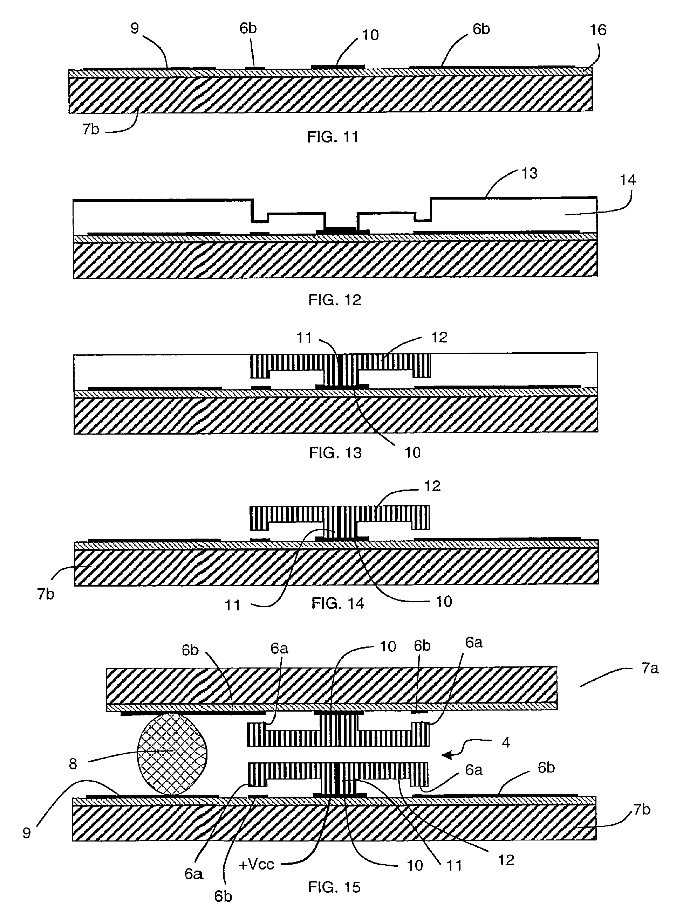

Selon un mode particulier de réalisation représenté à la figure 15, le capteur 2 peut être réalisé par des techniques de microélectronique. Le corps rigide 3 du capteur 2 est alors constitué par hybridation de deux substrats 7a et 7b disposés face à face, et reliés électriquement et mécaniquement par des billes conductrices 8, pour une meilleure lisibilité une seule bille est représentée sur la figure 15. Chaque substrat porte des zones conductrices 6b et une zone de contact d'alimentation 10 centrale, sur laquelle est formé un pilier central 11 supportant une couche conductrice 12. La couche conductrice 12 comporte à ses extrémités des zones en saillie, tournées vers le substrat, constituant les zones de contact 6a. L'élément déformable 4 est ainsi constitué par la combinaison de deux demi-éléments, constitués chacun par une couche conductrice 12 supportée par un pilier central 11 et respectivement associés aux substrats 7a et 7b. Les couches conductrices 12 des deux demi-éléments sont, de préférence, séparés par un espace, comme représenté sur la figure 15.

L'un des substrats, 7b sur la figure 15, comporte, de plus, des zones 9 de contact électrique de sortie du capteur. Chaque capteur comporte quatre zones 9, respectivement connectées aux différentes zones conductrices 6b du capteur, de manière à permettre la transmission des signaux S0 à S3 correspondants au circuit électronique de traitement 15. Les billes 8 constituent l'interconnexion électrique entre les zones conductrices 6b du substrat 7a et les zones 9 correspondantes de contact électrique de sortie du capteur. Le nombre de billes 8 est adapté en fonction du nombre d'interconnexions électriques à réaliser et de la tenue mécanique désirée pour le capteur après assemblage des deux substrats 7a et 7b.

Un mode particulier de réalisation d'un capteur selon la figure 15 va être décrit plus en détail au regard des figures 11 à 15. Tout d'abord (figure 11), les zones conductrices 6b, les zones 9 de contact électrique de sortie éventuelles et les zones de contact d'alimentation 10 sont réalisées sous la forme de contacts métalliques sur les substrats 7a ou 7b. Les substrats 7a et 7b sont, de préférence, en silicium oxydé, avec une couche d'oxyde 16 ayant une épaisseur de l'ordre de 1 micromètre par exemple. Les contacts métalliques sont, de préférence, réalisés en un métal qui ne s'oxyde pas, comme l'or (Au) ou un alliage de fer et de nickel (FeNi). Une couche sacrificielle 14, par exemple en résine ou en oxyde de silicium (SiO₂), est ensuite déposée sur le substrat et gravée par tout moyen approprié, de manière à constituer un moule pour le pilier 11 et la membrane 12. Comme représenté sur la figure 12, une sous-couche conductrice 13 est ensuite déposée sur la couche sacrificielle 14 gravée. La sous-couche conductrice 13 est de préférence réalisée en un métal qui ne s'oxyde pas (Au, FeNi). Le pilier 11 et la couche conductrice 12, par exemple en alliage fer-nickel, sont alors formés sur la zone de contact d'alimentation 10 par croissance électrolytique. Un polissage permet d'aplanir la surface et d'éliminer la sous-couche conductrice 13 à la périphérie de la couche conductrice 12 (figure 13). Ensuite (figure 14), l'élimination de la couche sacrificielle 14 permet d'obtenir le demi-élément déformable associé au substrat 7b. Puis, les billes 8 sont formées notamment sur les zones 9 de contact électrique de sortie du substrat 7b. Enfin, comme le montre la figure 15, l'hybridation des deux substrats 7a et 7b, disposés face à face, est effectuée par un procédé du type « puce retournée » (flip-chip), c'est-à-dire que le substrat 7a est retourné et fixé sur le substrat 7b portant les billes 8. Les billes permettent ainsi de faire transiter les pistes électriques du substrat du haut 7a sur le substrat du bas 7b et de pouvoir facilement prendre tous les contacts. Elles assurent également une bonne tenue mécanique de l'ensemble.

Le détecteur décrit ci-dessus comporte donc trois capteurs identiques, qui sont sensibles chacun à une rotation et une translation et qui possèdent chacun cinq états, représentés sur les figures 3 à 7. Il permet ainsi de déterminer à la fois le type de déplacement et son sens. Par ailleurs, chaque capteur est insensible aux vibrations qui se produisent dans les autres directions que celles auxquelles il est sensible. De plus, le détecteur utilisant des états binaires, il ne nécessite pas de calibrage.

Le détecteur selon l'invention a la faculté de détecter des impulsions, supérieures à un certain seuil, et non des signaux continus, sur six degrés de liberté avec seulement trois capteurs de position. La présence du seuil de détection permet d'utiliser le dispositif par rapport à un environnement relatif, comme on le fait pour une souris lorsque celle-ci se trouve en dehors du tapis, et d'envisager de nouveaux modes de navigations informatiques. De plus, en faisant appel aux micro-technologies de type MEMS (Micro Electronical and Mechanical System), il est possible d'atteindre de très faibles coûts et un faible encombrement. Le détecteur peut donc tenir dans la main et s'intégrer facilement dans des outils personnels portables, notamment téléphone, PDA (assistant numérique de poche), afin d'enrichir leurs fonctionnalités.

L'invention n'est pas limitée aux modes de réalisation décrits ci-dessus. En particulier, les trois axes X, Y et Z peuvent ne pas être orthogonaux.

## Revendications

1. Détecteur de mouvement à six degrés de liberté comportant un support (1) sur lequel sont disposés trois capteurs de position (2a), (2b) et (2c), disposés suivant trois axes orthogonaux, chaque capteur comportant un corps rigide (3), des zones conductrices (6b) disposées sur le corps rigide (3) et un élément déformable (4), électriquement conducteur, présentant une position de repos, dans laquelle il est isolé des zones conductrices (6b), et passant de la position de repos à une position active en réponse à un déplacement rapide de sens et de direction prédéterminés, détecteur **caractérisé en ce que** chaque capteur (2a, 2b, 2c) comporte quatre zones conductrices (6b), disposées deux par deux sur deux parois internes opposées du corps rigide (3), et **en ce que** l'élément déformable (4) associé à chaque capteur (2a, 2b, 2c) est en équilibre autour de sa partie centrale, répond à une translation selon un axe prédéterminé par une flexion provoquant un contact simultané et temporaire de ses extrémités avec les deux zones conductrices (6b) d'une même paroi interne et répond à une rotation autour d'un axe prédéterminé par un pivotement provoquant un contact simultané et temporaire de ses extrémités avec deux zones conductrices (6b) disposées sur des parois internes opposées.

2. Détecteur selon la revendication 1, **caractérisé en ce qu'**il comporte un circuit électronique de traitement (15), connecté aux zones conductrices (6b) des trois capteurs.

3. Détecteur selon l'une des revendications 1 et 2, **caractérisé en ce que** l'élément déformable (4) est une poutre en équilibre autour de son axe médian transversal.

4. Détecteur selon la revendication 3, **caractérisé en ce que** la poutre comporte des zones conductrices (6a) à ses extrémités.

5. Détecteur selon l'une des revendications 1 et 2, **caractérisé en ce que** l'élément déformable (4) est un disque en équilibre autour de son axe central.

6. Détecteur selon la revendication 5, **caractérisé en ce que** le disque comporte une zone conductrice périphérique (6a) sur chacune de ses faces.

7. Détecteur selon l'une quelconque des revendications 1 à 6, **caractérisé en ce que** l'élément déformable (4) est connecté électriquement à une zone de contact d'alimentation (10) disposée sur le corps rigide (3) du capteur.

8. Détecteur selon l'une quelconque des revendications 1 à 7, **caractérisé en ce que** l'élément déformable (4) est dans une position d'équilibre correspondant à la position de repos du capteur pour tout déplacement dont l'accélération est inférieure ou égale à la force de gravité G.

9. Détecteur selon l'une quelconque des revendications 1 à 8, **caractérisé en ce que** le corps rigide d'un capteur comporte deux substrats (7a) et (7b) disposés face à face, connectés par des billes (8) constituant une interconnexion électrique entre les zones conductrices (6b) de l'un des substrats (7a) et des zones de contact électrique de sortie (9) formés sur l'autre substrat (7b).

10. Détecteur selon la revendication 9, **caractérisé en ce que** l'élément déformable (4) est constitué par deux demi-éléments déformables comportant une couche conductrice (12), supportée par un pilier central (11), formé sur une zone de contact d'alimentation (10) centrale, formée sur le substrat (7a, 7b) correspondant.

11. Procédé de fabrication d'un capteur selon la revendication 10, **caractérisé en ce qu'**il est réalisé par des techniques de microélectronique et comporte :
- la formation sur chacun des substrats (7a, 7b) de zones conductrices (6b), de zones de contact d'alimentation (10) et, sur l'un des substrats (7b), de zones de contact électrique de sortie (9),
- la formation sur chacun des substrats (7a, 7b) d'un pilier central (11), en contact avec la zone de contact d'alimentation (10) et supportant une couche conductrice (12) destinée à constituer un demi-élément déformable,
- l'installation de billes (8) sur les zones de contact électrique de sortie (9),
- l'hybridation des deux substrats (7a) et (7b) disposés face à face.

## Claims

1. Movement detector having six degrees of freedom comprising a support (1) on which three position sensors (2a), (2b) and (2c) are arranged according to three orthogonal axes, each sensor comprising a rigid body (3), conducting areas (6b) arranged on the rigid body (3) and an electrically conducting deformable element (4) presenting a rest position in which it is isolated from the conducting areas (6b), and moving from the rest position to an active position in response to a high-speed movement of predetermined direction and orientation, detector **characterized in that** each sensor (2a, 2b, 2c) comprises four conducting areas (6b), arranged two by two on two opposite inside walls of the rigid body (3), and that the deformable element (4) associated with each sensor (2a, 2b, 2c) is in equilibrium around its central part, responds to a translation along a predetermined axis by bending causing a simultaneous and temporary contact of its ends with the two conducting areas (6b) of one and the same inside wall and responds to a rotation around a predetermined axis by a pivoting causing a simultaneous and temporary contact of its ends with two conducting areas (6b) arranged on opposite inside walls.

2. Detector according to claim 1, **characterized in that** it comprises an electronic processing circuit (15) connected to the conducting areas (6b) of the three sensors.

3. Detector according to one of the claims 1 and 2, **characterized in that** the deformable element (4) is a beam in equilibrium around its transverse median axis.

4. Detector according to claim 3, **characterized in that** the beam comprises conducting areas (6a) at the ends thereof.

5. Detector according to one of the claims 1 and 2, **characterized in that** the deformable element (4) is a disc in equilibrium around its central axis.

6. Detector according to claim 5, **characterized in that** the disc comprises a peripheral conducting area (6a) on each of its faces.

7. Detector according to any one of the claims 1 to 6, **characterized in that** the deformable element (4) is electrically connected to a power supply contact area (10) arranged on the rigid body (3) of the sensor.

8. Detector according to any one of the claims 1 to 7, **characterized in that** the deformable element (4) is in an equilibrium position corresponding to the rest position of the sensor for any movement the acceleration whereof is less than or equal to the force of gravity G.

9. Detector according to any one of the claims 1 to 8, **characterized in that** the rigid body of a sensor comprises two substrates (7a) and (7b) arranged face to face, connected by balls (8) constituting an electrical interconnection between the conducting areas (6b) of one of the substrates (7a) and output electrical contact areas (9) formed on the other substrate (7b).

10. Detector according to claim 9, **characterized in that** the deformable element (4) is formed by two deformable half-elements comprising a conducting layer (12), supported by a central pillar (11), formed on a central power supply contact area (10), formed on the corresponding substrate (7a, 7b).

11. Method for production of a sensor according to claim 10, **characterized in that** it is achieved by microelectronics techniques and comprises:
- formation on each of the substrates (7a, 7b) of conducting areas (6b), of power supply contact areas (10) and, on one of the substrates (7b), of output electrical contact areas (9),
- formation on each of the substrates (7a, 7b) of a central pillar (11), in contact with the power supply contact area (10) and supporting a conducting layer (12) designed to form a deformable half-element,
- installation of balls (8) on the output electrical contact areas (9),
- hybridization of the two substrates (7a) and (7b) arranged face to face.

## Patentansprüche

1. Bewegungsdetektor mit sechs Freiheitsgraden, der einen Träger (1) umfasst, an dem drei Positionssensoren (2a), (2b) und (2c) montiert sind, die entlang dreier orthogonaler Achsen angeordnet sind, wobei jeder Sensor einen starren Körper (3), an dem starren Körper (3) angeordnete leitende Bereiche (6b) und ein elektrisch leitendes verformbares Element (4) umfasst, das eine Ruhestellung aufweist, in der es von den leitenden Bereichen (6b) getrennt ist, und als Reaktion auf eine schnelle Bewegung mit vorbestimmter Richtung und Ausrichtung aus der Ruhestellung in eine aktive Stellung wechselt, Detektor, der **dadurch gekennzeichnet ist, dass** jeder Sensor (2a, 2b, 2c) vier leitende Bereiche (6b) umfasst, die paarweise an zwei entgegengesetzten Innenwänden des starren Körpers (3) angeordnet sind, sowie **dadurch**, dass das jedem Sensor (2a, 2b, 2c) zugeordnete verformbare Element (4) um seinen Mittelbereich herum im Gleichgewicht ist, auf eine Parallelverschiebung entlang einer vorbestimmten Achse durch eine Durchbiegung reagiert, die einen gleichzeitigen und vorübergehenden Kontakt seiner Enden mit zwei leitenden Bereichen (6b) ein und derselben Innenwand bewirkt, und auf eine Drehung um eine vorbestimmte Achse durch eine Schwenkbewegung reagiert, die einen gleichzeitigen und vorübergehenden Kontakt seiner Enden mit zwei leitenden Bereichen (6b) an entgegengesetzten Innenwänden bewirkt.

2. Detektor nach Anspruch 1, **dadurch gekennzeichnet, dass** er eine elektronische Verarbeitungsschaltung (15) umfasst, die an zwei leitende Bereiche (6b) der drei Sensoren angeschlossen ist.

3. Detektor nach einem der Ansprüche 1 und 2, **dadurch gekennzeichnet, dass** das verformbare Element (4) ein Balken ist, der um seine transversale Mittelachse herum im Gleichgewicht ist.

4. Detektor nach Anspruch 3, **dadurch gekennzeichnet, dass** der Balken an seinen Enden leitende Bereiche (6a) aufweist.

5. Detektor nach einem der Ansprüche 1 und 2, **dadurch gekennzeichnet, dass** das verformbare Element (4) eine Scheibe ist, die um ihre Mittelachse herum im Gleichgewicht ist.

6. Detektor nach Anspruch 5, **dadurch gekennzeichnet, dass** die Scheibe auf jeder ihrer Seiten am Umfang einen leitenden Bereich (6a) aufweist.

7. Detektor nach einem der Ansprüche 1 bis 6, **dadurch gekennzeichnet, dass** das verformbare Element (4) elektrisch an einen Stromversorgungs-Kontaktbereich (10) angeschlossen ist, der an dem starren Körper (3) des Sensors vorgesehen ist.

8. Detektor nach einem der Ansprüche 1 bis 7, **dadurch gekennzeichnet, dass** das verformbare Element (4) sich in einer Gleichgewichtsstellung befindet, die der Ruhestellung des Sensors bei jeder Bewegung entspricht, deren Beschleunigung geringer als die oder gleich der Schwerkraft G ist.

9. Detektor nach einem der Ansprüche 1 bis 8, **dadurch gekennzeichnet, dass** der starre Körper eines Sensors zwei Substrate (7a) und (7b) umfasst, die einander gegenüber angeordnet und durch Kugeln (8) verbunden sind, die eine elektrische Verbindung der leitenden Bereiche (6b) eines der Substrate (7a) und der Ausgangselektrokontaktbereiche (9) bilden, die auf dem anderen Substrat (7b) gebildet sind.

10. Detektor nach Anspruch 9, **dadurch gekennzeichnet, dass** das verformbare Element (4) von zwei verformbaren Halbelementen gebildet wird, die eine leitende Schicht (12) aufweisen, die von einem Mittelbalken (11) getragen wird, der auf einem zentralen Stromversorgungskontaktbereich (10) gebildet ist, der auf dem entsprechenden Substrat (7a, 7b) vorgesehen ist.

11. Herstellungsverfahren für einen Sensor nach Anspruch 10, **dadurch gekennzeichnet, dass** es mittels Mikroelektroniktechniken durchgeführt wird und umfasst:
- die Bildung leitender Bereiche (6b), von Stromversorgungskontaktbereichen (10) auf jedem Substrat (7a, 7b) und von elektrischen Ausgangskontaktbereichen (9) auf einem der Substrate (7b),
- die Bildung eines zentralen Mittelbalkens (11) auf jedem Substrat (7a, 7b), der in Kontakt mit dem Stromversorgungskontaktbereich (10) ist und eine leitende Schicht (12) trägt, die dazu bestimmt ist, ein verformbares Halbelement zu bilden,
- das Anbringen von Kugeln (8) in den Ausgangselektrokontaktbereichen (9),
- die Hybridisierung der beiden einander gegenüber angeordneten Substrate (7a) und (7b).
